Europäisches Patentamt

**European Patent Office**

Office européen des brevets

(19)

(11) Veröffentlichungsnummer: **0 272 401**
B1

(12)

# EUROPÄISCHE PATENTSCHRIFT

(45) Veröffentlichungstag der Patentschrift:
**29.11.89**

(51) Int. Cl.⁴: **H02K 11/00,** H02K 19/00, H02K 21/00, H02K 37/00

(21) Anmeldenummer: **87115495.1**

(22) Anmeldetag: **22.10.87**

(54) **Steckeranschluss für Kleinmotor.**

(30) Priorität: **14.11.86 DE 3639004**

(43) Veröffentlichungstag der Anmeldung:
**29.06.88 Patentblatt 88/26**

(45) Bekanntmachung des Hinweises auf die Patenterteilung:
**29.11.89 Patentblatt 89/48**

(84) Benannte Vertragsstaaten:
**CH DE FR LI NL**

(56) Entgegenhaltungen:
**EP-A- 0 017 075**
**EP-A- 0 197 888**
**DE-A- 2 712 824**
**DE-A- 2 745 109**
**DE-A- 3 426 973**
**DE-A- 3 442 348**
**DE-A- 3 505 092**
**US-A- 4 096 625**
**US-A- 4 224 543**

**PATENT ABSTRACTS OF JAPAN, Band 9, Nr. 75, 4. April 1985 (E-306)(1798); & JP - A - 59 209 033 (K.K. SONY) 27.11.1984**

(73) Patentinhaber: **Licentia Patent-Verwaltungs-GmbH, Theodor-Stern-Kai 1, D-6000 Frankfurt/Main 70(DE)**

(72) Erfinder: **Traeger, Friedrich, Dipl.-ing., Reimerswalder Steig 5, D-1000 Berlin 27(DE)**
Erfinder: **Lenza, Bernd, Ing. grad., An der Kappe 133, D-1000 Berlin 20(DE)**
Erfinder: **Pfitzner, Jürgen, Mergentheimer Strasse 12, D-1000 Berlin 46(DE)**

(74) Vertreter: **Lertes, Kurt, Dr. et al, Licentia Patent-Verwaltungs-GmbH Theodor-Stern-Kai 1, D-6000 Frankfurt/M 70(DE)**

## Beschreibung

Die Erfindung bezieht sich auf die Ausbildung eines Kleinmotors entsprechend dem Oberbegriff des Anspruchs 1.

Durch die DE-A 3 426 973 ist ein Außenläufermotor mit einer zwischen der Motorwicklung und dem Motorflansch angeordneten Leiterplatte bekannt, deren aufgedruckte Leiterbahnen einerseits mit den Wicklungsenden der Motorwicklung und andererseits mit einem von außen zugeführten Anschlußkabel verbunden sind.

Die Verbindung zwischen dem Anschlußkabel und den Leiterbahnen der Leiterplatte ist dabei als auf dem Außenrand der Leiterplatte befestigbarer Stecker ausgebildet, für den im Motorflansch eine Öffnung vorgesehen ist.

In der EP-A 17 075 ist ein weiterer Außenläufermotor dargestellt und beschrieben, bei dem zwischen einem Wickelkopf und dem gegenüberliegenden Lagerschild eine Leiterplatte angeordnet ist, deren Leiterbahnen zum einen mit den Wicklungsenden der Statorwicklung und zum anderen mit einem äußeren Motoranschlußkabel verbunden sind. Die Leiterplatte ist hierbei mit dem nach außen herausgeführten Motorenschlußkabel am Lagerschild vormontiert und mit festen Kontaktbuchsen versehen, die bei der Montageverbindung zwischen Lagerschild und Stator-Blechpaket mit den freien Enden korrespondierender Kontaktstifte kontaktierbar sind. Die Kontaktstifte sind dabei an der einen Isolierendscheibe des Statorblechpakets befestigt und mit den Wicklungsenden der Statorwicklung verbunden.

Als Schrittmotor ausgebildete Kleinmotoren der gattungsgemäßen Art sind durch den Katalog "AEG Schritt-Motoren", Ausgabe 1983/84, bekannt. Solche Motoren finden beispielsweise als Antrieb für zeithaltende Geräte oder als Zwei-Phasen-Schrittmotoren mit zwei baugleichen Statorsystemen Verwendung. Bei Motoren dieser Art werden die Anschlüsse für die Erregerspulen bisher üblicherweise als Litzen unterschiedlicher längs aus dem Motorgehäuse herausgeführt und mittels beliebiger Verbindungselemente mit den zugeordneten Anschlüssen im Gerät verbunden. Die in immer stärkerem Maße angewendete Automatisierung in der Gerätefertigung macht es auch bei solchen Motoren erforderlich, zur Vereinfachung der Herstellung elektrischer Verbindungen steckbare Verbindungselemente direkt am Motor anzuordnen.

Der Erfindung liegt die Aufgabe zugrunde, derartige Kleinmotoren so auszugestalten, daß die in einem vollautomatischen Fertigungsverfahren hergestellten Erregerspulen mittels eines ebenfalls vollautomatischen Fügeverfahrens an eine Schnittstelle zu einem handelsüblichen Steckverbindersystem anschließbar sind, wobei die Schnittstelle fest am Motor angeordnet sein soll.

Die Aufgabe wird gemäß der Erfindung durch die im Kennzeichnungsteil des Anspruchs 1 aufgeführten Maßnahmen gelöst, während in den Ansprüchen 2 bis 10 besonders vorteilhafte Weiterbildungen der Erfindung gekennzeichnet sind.

Durch die Erfindung ergibt sich einerseits der Vorteil, daß die Fertigung des kompletten Motors einschließlich seiner Anschlüsse auf einer vollautomatischen Fertigungsstraße ermöglicht wird und daß andererseits Steckanschlüsse unterschiedlichster Art fest am Motorgehäuse installierbar sind, wodurch die Möglichkeit der vollautomatischen Einbringung des Motors in das Gerät gegeben ist.

Die Erfindung wird anhand eines in der Zeichnung dargestellten, besonders vorteilhaften Ausführungsbeispiels erläutert.

Figur 1 zeigt die Prinzipskizze eines gemäß der Erfindung ausgebildeten Zwei-Phasen-Schrittmotors,

Figur 2 zeigt eine Schnittzeichnung der Anschlußstellen für die Spulenverbinder an die Leiterplatte,

Figur 3 zeigt die Draufsicht auf eine Leiterplatte,

Figur 4 zeigt die Draufsicht auf eine Leiterplatte abgewandelter Bauart,

Figur 5 zeigt die Verbindung einer Leiterplatte gemäß Fig. 4 mit den Anschlußstiften der Spulen.

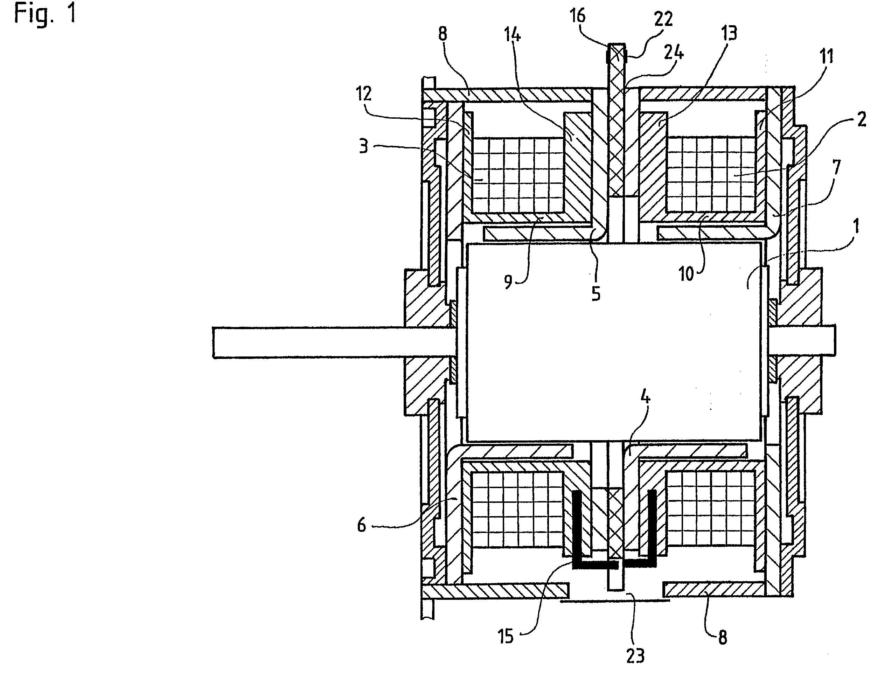

In der Figur 1 ist eine Prinzipskizze eines Schrittmotors mit zwei nach dem Klauenpolprinzip aufgebauten Statorsystemen dargestellt. In üblicher Weise wirkt der magnetisierte Läufer 1 mit den beiden Statorsystemen zusammen, welche jeweils aus einer Ringspule 2 und 3, einem inneren Polblech 4 und 5 sowie einem äußeren Polblech 6 und 7 bestehen. Der Motor wird von dem zylindrischen Gehäuse 8 umgeben. Die Ringspulen 2 und 3 sind auf Spulenkörper 9 und 10 aufgebracht, die mit je einem äußeren Flansch 11 und 12 sowie einem inneren Flansch 13 und 14 versehen sind. Die Spulenkörper 9 und 10 tragen an einem abgeflachten Teil ihrer inneren Flanschen Anschlußstifte 15, mit denen die Wicklungsenden elektrisch leitend verbunden sind.

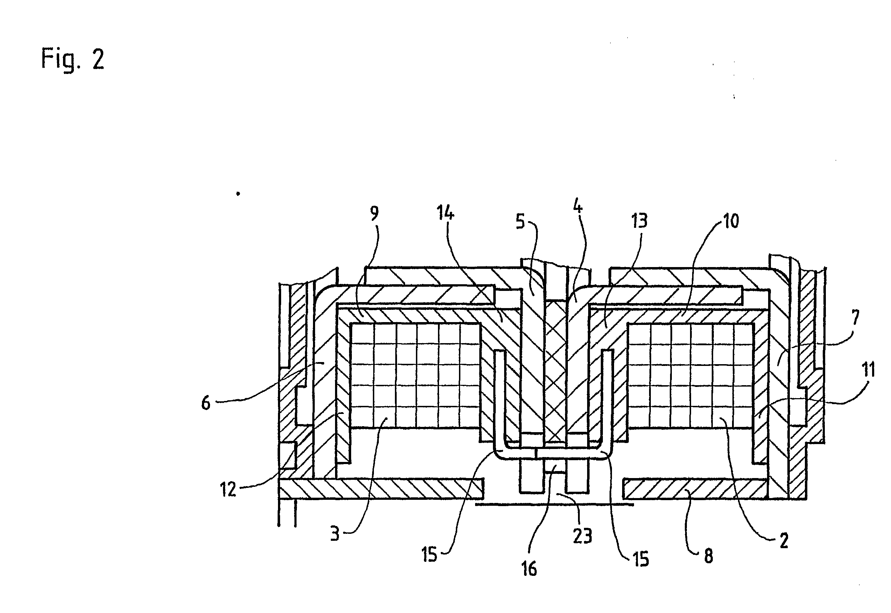

In der Figur 2 sind die anhand der Figur 1 beschriebenen Bauteile in einer vergrößerten Detailzeichnung eines nach dem gleichen Prinzip arbeitenden, jedoch in seinem Aufbau geringfügig anders gestalteten Schrittmotors dargestellt, wobei für äquivalente Bauteile die in Fig. 1 benutzten Bezugszeichen beibehalten werden.

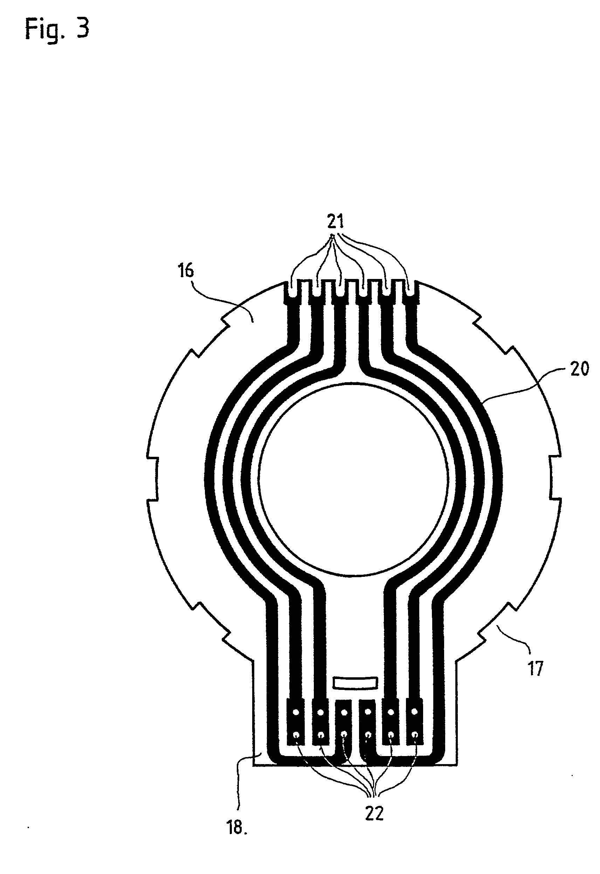

Aus den beiden Figuren 1 und 2 ist ersichtlich, daß mittig zwischen den beiden Statorsystemen, unmittelbar an den beiden inneren Polblechen 4 und 5 anliegend, eine Leiterplatte 16 senkrecht zur Richtung der Motorachse angeordnet ist. In einer vorteilhaften Ausführungsform, wie sie in der Fig. 3 dargestellt ist, hat die Leiterplatte 16 eine kreisringförmige Grundform, in welcher Ausnehmungen 17 oder Durchbrechungen angebracht sein können, um die Leiterplatte 16 an Bauteilen des Motors, z. B. dem Gehäuse 8, verdrehsicher zu befestigen. Gemäß der Fig. 3 besitzt die Leiterplatte 16 einen oder mehrere radiale Vorsprünge 18, die jeweils an einer hinsichtlich des Aufbaus des Motors geeigneten Stelle des Umfanges der Leiterplatte 16 angeordnet sein können.

Die Leiterplatte 16 trägt mehrere Leiterbahnen 20, deren Anzahl je nach Aufbau und Verwendungszweck des Motors variieren kann und die mittels eines der gebräuchlichen Verfahren auf das Substrat der Leiterplatte aufgebracht und gegebenenfalls durch einen isolierenden Überzug abgedeckt sind. Diese Leiterbahnen verlaufen von den Anschlußstellen 21 für die Anschlußstifte 15 zu dem Steckverbinderanschluß 22, der im beschriebenen Beispiel auf dem Vorsprung 18 der Leiterplatte 16 angeordnet ist.

Die Verbindung der vorzugsweise auf dem Umfang der inneren Spulenflansche 13, 14 radial hervorstehend angeordneten Anschlußstifte 15 mit den Anschlußstellen 21 der Leiterplatte 16 ist aus der Fig. 2 ersichtlich. Am Ende des Wickelvorganges der Spulenwindungen werden die Drahtenden mehrfach um die Anschlußstifte 15 gewunden, die Anschlußstifte 15 danach um 90° nach außen abgewinkelt und bei der Montage des Motors in die als durchkontaktierte Bohrungen oder nach außen offenen Einschlitzungen ausgebildeten Anschlußstellen 21 der Leiterplatte 16 eingebracht. Die Verbindung der Anschlußstifte 15 mit den Leiterbahnen 20 erfolgt beispielsweise mittels Lötung nach dem Schwall- oder Löffellotverfahren und wird in vorteilhafter Weise am fertig montierten Motor vorgenommen. Zu diesem Zweck ist im Gehäuse 8 eine Ausnehmung 23 vorgesehen, die das Einführen einer entsprechenden Lötvorrichtung erlaubt. In vorteilhafter Weise wird nach Fertigstellung der Verbindung die Ausnehmung 23 z. B. durch das aufgeklebte Typenschild des Motors oder ein anderes Bauteil verschlossen.

Der Vorsprung 18 der Leiterplatte ragt, wie aus der Fig. 1 ersichtlich, über den Außenumfang des Motorgehäuses 8 hinaus. Die Steckverbinderanschlüsse 22, die ebenfalls als durchkontaktierte Bohrungen oder Schlitze ausgebildet sein können, dienen zur Aufnahme handelsüblicher, in der Zeichnung nicht dargestellter Leiterplatten-Steckverbinder, auf welche dann bei Einbringung des Motors in das Gerät ein Kupplungsteil aufgesteckt wird.

Prinzipiell ist es im Rahmen der Erfindung möglich, den Vorsprung 18 in mehrere, an beliebigen Stellen des Motorgehäuseumfanges angeordnete Anschlußstellen aufzuteilen, von denen jede einen eigenen Steckverbinder trägt. Dadurch entsteht der Vorteil, daß die Steckverbindungen den jeweiligen Gegebenheiten des Gerätes im optimaler Weise angepaßt werden können. Die Achse der Steckerverbinderstifte und somit auch die Aufsteckrichtung des Kupplungsteiles verläuft in bevorzugter Weise in Motorachsrichtung, kann jedoch auch durch Verwendung entsprechender Steckerteile senkrecht oder in einem beliebigen Winkel dazu verlaufen.

Die Raumform der Leiterplatte ist nicht an das dargestellte Ausführungsbeispiel gebunden, sie kann im Rahmen der Erfindung jede beliebige Gestalt aufweisen, die die Unterbringung der Leiterbahnen zur Verbindung der Spulenanschlüsse mit den Steckverbindern zuläßt.

In diesem Zusammenhang ist es auch möglich, die Steckverbinder unmittelbar benachbart oder unmittelbar radial über den Spulenanschlüssen anzuordnen. Es hat sich jedoch als vorteilhaft herausgestellt, die Anschlußstifte 15 in einem gegenseitigen Abstand von 4 mm zueinander auf dem Spulenflansch anzuordnen, um genügend Raum für den Flyer der Wickelmaschine beim Anschlagen der Wicklungsenden zu haben und andererseits aus Gründen der Miniaturisierung vorzugsweise Leiterplatten-Steckverbinder mit einem Steckerstift-Abstand von 2 mm zueinander zu verwenden. Die Ausführung der Leiterplatte gemäß der Erfindung läßt in vorteilhafter Weise die Anordnung von Aufnahmen für Stifte aller geeigneten bzw. erforderlichen Abstände an nahezu jeder beliebigen Stelle der Leiterplatte zu.

Die Leiterplatte der beschriebenen Art bringt darüber hinaus den weiteren Vorteil mit sich, daß sie bei Motoren bestimmter Bauarten anstelle einer dort benötigten Abdeckkappe oder Isolierscheibe, die insbesondere zur Isolierung der Spulenanschlüsse nach erfolgtem Lötvorgang dient, treten kann. Da diese Isolierscheibe nunmehr wegfällt, bleibt die Baulänge des Motors gleich. Eine zusätzliche Isolierung der Lötstelle ist beispielsweise bei einer Anordnung gemäß Fig. 2 nicht mehr erforderlich, die notwendigen Isolationsabstände werden aufgrund der Formgebung der angrenzenden Bauteile sowie der durch die automatische Fertigung bedingten Gleichmäßigkeit der räumlichen Zuordnung aller Bauteile zueinander sicher eingehalten.

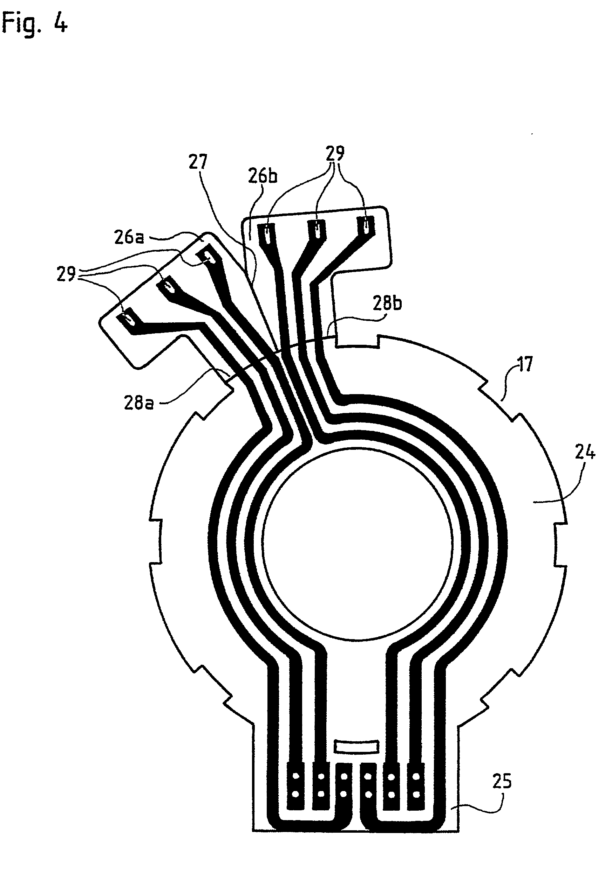

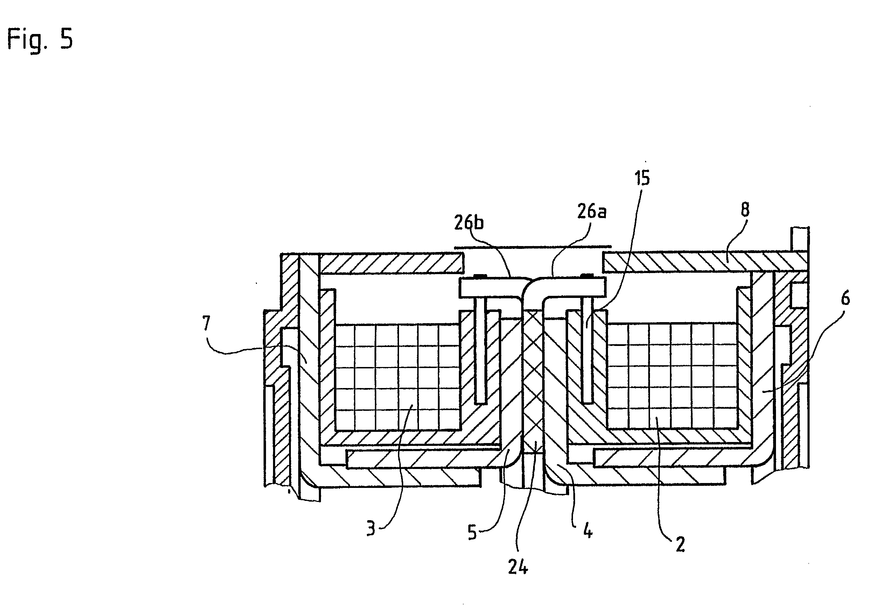

Die Erfindung ist nicht auf das beschriebene Ausführungsbeispiel beschränkt. So kann in vorteilhafter Weise als Träger für die Leiterbahnen ein flexibles, filmartiges Substrat sehr geringer Dicke Verwendung finden, wie dies anhand der Fig. 4 näher beschrieben ist. Die Leiterplatte 24 kann beispielsweise in ihren Umrissen gleich oder ähnlich der Leiterplatte 16 ausgebildet und auch zwischen zwei Statorsystemen angeordnet sein, wie auch die Leiterbahnen selbst in der gleichen, oben beschriebenen Weise angeordnet sein können. Ein radialer Vorsprung 25 dient auch hier zur Aufnahme eines Steckverbinderanschlusses, wobei der Steckverbinder selbst beispielsweise durch direkte Anlage am Gehäuse 8 in seiner Einbaulage fixiert ist. Die Verbindung der Leiterbahnen mit den Anschlußstiften 15 der Ringspulen erfolgt derart, daß am Umfang der Leiterplatte 24 Laschen 26 radial vorspringend angeordnet sind, die an der Linie 27 trennbar und an der Linie 28 umklappbar ausgebildet sind. Wie aus der Fig. 5 zu ersehen ist, in der ebenfalls diejenigen Bauteile, die denen der Figuren 1 und 2 entsprechen, mit den gleichen Bezugszeichen versehen sind, werden nach dem Anschlagen der Wicklungsenden die Anschlußstifte 15 nicht abgewinkelt, sondern die Laschen 26a und 26b der Leiterplatte 24 werden an der Linie 27 getrennt, rechtwinklig etwa in Höhe der Linien 28a und 28b in zueinander entgegengesetzte Richtungen abgebogen und mit den Anschlußstellen 29, die als Öffnungen ausgeführt sind, über die Anschlußstifte 15 gebracht, so daß die Anschlußstifte 15 die Anschlußstellen 29 durchgreifen und anschließend verlötet werden können.

Weiterhin besteht in vorteilhafter Weise die Möglichkeit, die Flansche der Spulen selbst als Trägersubstrat für die Leiterbahnen zu verwenden, mit Anschlußstellen für die Anschlußstifte und für die Steckverbinder zu versehen und die dafür erforderlichen radialen Vorsprünge am Spulenflansch anzuordnen, so daß eine einstückige Ausbildung des Spulenflansches mit der Leiterplatte gegeben ist.

Schließlich besteht im Rahmen der Erfindung auch die Möglichkeit, spulenübergreifende Isolierkappen als Leiterplatten auszubilden und zwar derart, daß die Leiterbahnen auf dem den Wickelraum des Spulenkörpers überdeckenden Teil der Isolierkappe aufgebracht sind. Andererseits können in vorteilhafter Weise die Leiterplatten als Träger für vorwiegend in Miniaturbauweise ausgeführte elektronische Bauteile ausgebildet sein und mit zusätzlichen, diesem Zweck dienenden Leiterbahnen versehen werden.

**Patentansprüche**

1. Kleinmotor, der als Schritt bzw. Synchronmotor ausgebildet ist und mindestens zwei in Motorachsrichtung nebeneinander angeordnete Statorsysteme besitzt, die jeweils aus einer Erregerspule (2, 3) und Polblechen (5, 6; 4, 7) bestehen, wobei die Erregerspulen auf Spulenkörper (9, 10) aufgebracht sind, die jeweils einen inneren Flansch (13, 14) und einen äußeren Flansch (11, 12)) besitzen und an einem abgeflachten Teil ihrer inneren Flansche (13, 14) mit den Wicklungsenden elektrisch leitend verbundene Anschlußstifte (15) tragen, dadurch gekennzeichnet, daß beide Statorsysteme in einem gemeinsamen Motorgehäuse (8) angeordnet sind, das wenigstens eine Ausnehmung für das Motorgehäuse (8) überragende Vorsprünge (18, 25) einer zwischen den Statorsystemen angeordneten, mit Leiterbahnen (20) versehenen Leiterplatte (16, 24) besitzt, wobei die das Motorgehäuse überragenden Vorsprünge mit für eine Steckverbindung geeigneten Anschlüssen (22) versehen sind, und das mindestens eine weitere Ausnehmung (23) für den Zugang zu räumlich versetzt liegenden Anschlußstellen (21, 29) der Leiterplatten (16, 24) an die Anschlußstifte (15) für die Wicklungsenden der Erregerspulen (2, 3) aufweist.

2. Kleinmotor nach Anspruch 1, dadurch gekennzeichnet, daß die Leiterplatte (16) mittig zwischen den Spulenkörpern (9, 10) im Motorgehäuse (8) angeordnet ist, daß die an den Spulenflanschen (13, 14) angebrachten Anschlußstifte (15) für die Wicklungsenden vom Spulenflansch (13, 14) rechtwinklig nach außen abgebogen und jeweils mit der Anschlußstelle (21) einer Leiterbahn verlötet sind und daß der Vorsprung (18) zur Anschlußstelle versetzt angeordnet und mit einem Steckverbinderanschluß (22) handelsüblicher Art versehen ist.

3. Kleinmotor nach den Ansprüchen 1 und 2, dadurch gekennzeichnet, daß die Leiterplatte einstückig mit dem Flansch (13, 14) des Spulenkörpers (9, 10) einer Erregerspule ausgebildet ist.

4. Kleinmotor nach den Ansprüchen 1 bis 3, dadurch gekennzeichnet, daß am Außenumfang der Leiterplatte (16) mehrere Anschlußstellen (21) für die Spulenenden und/oder mehrere Vorsprünge (18) für Steckverbinderanschlüsse (22) angeordnet sind.

5. Kleinmotor nach einem der vorhergehenden Ansprüche, dadurch gekennzeichnet, daß der Motor mehrere in Motorachsrichtung nebeneinander angeordnete Statorsysteme und mehrere Leiterplatten (16) in einer solchen Anordnung aufweist, daß jeder Erregerwicklung mehrere auf einer Leiterplatte (16) angeordnete Leiterbahnen (20) zugeordnet sind.

6. Kleinmotor nach einem der vorhergehenden Ansprüche, dadurch gekennzeichnet, daß die Leiterplatte (24) aus einem Filmsubstrat besteht und eine oder mehrere Laschen (26a, 26b) besitzt, auf denen Anschlußstellen (29) für die Anschlußstifte (15) angeordnet sind und die aus der Leiterplattenebene herausklappbar sind.

7. Kleinmotor nach einem der vorhergehenden Ansprüche, dadurch gekennzeichnet, daß die Leiterplatte als den Wickelraum eines Spulenkörpers (9, 10) überbrückendes Bauteil ausgebildet ist.

8. Kleinmotor nach den Ansprüchen 1 bis 7, dadurch gekennzeichnet, daß die Kupplungsteile für die an einem Steckverbinderanschluß (22) auf der Leiterplatte angebrachten Steckverbinder vorzugsweise in Motorachsrichtung einsteckbar sind.

9. Kleinmotor nach den Ansprüchen 1 bis 10, dadurch gekennzeichnet, daß die Anschlußstellen (21) der Leiterplatte (16) als durchkontaktierte Bohrungen und/oder Schlitze ausgebildet sind.

10. Kleinmotor nach den Ansprüchen 1 bis 12, dadurch gekennzeichnet, daß die Leiterplatte (16) als Träger für miniaturisierte, vorwiegend elektronische Bauteile ausgebildet ist und entsprechende zusätzliche Leiterbahnen und -anschlüsse aufweist.

**Revendications**

1. Petit moteur ayant la structure d'un moteur pas à pas ou synchrone et comportant deux systèmes de stator au moins qui sont disposés l'un à côté de l'autre dans la direction de l'axe du moteur et sont constitués chacun par une bobine excitatrice (2, 3) et par des tôles de pôle (5, 6, 4, 7), les bobines excitatrices étant montées sur des corps de bobine (9, 10) qui comportent chacun une bride intérieure (13, 14) et une bride extérieure (11, 12) et portent, sur une partie plate de leurs brides intérieures (13, 14), des broches de sortie (15) reliées électriquement aux extrémités des enroulements, caractérisé en ce que les deux systèmes de stators sont placés dans un carter de moteur commun (8) qui comporte au moins un évidement pour des parties (18, 25) qui font saillie par rapport au carter du moteur à partir d'une plaquette (16, 24) intercalée entre les systèmes de stators et comportant des pistes conductives (20), les parties qui font saillie par rapport au carter du moteur comportant des raccords (22) adaptés à une connexion par fiches, et qui comporte au moins un autre évidement (23) permettant l'accès aux emplacements de raccord (21, 29), décalés dans l'espace de la plaquette (16, 24) aux broches de sortie (15) destinées aux extrémités des enroulements des bobines excitatrices (2, 3).

2. Petit moteur selon la revendication 1, caractérisé en ce que la plaquette (16) est située au milieu entre les corps de bobine (9, 10) dans le carter de moteur (8), en ce que les broches de sortie (15) qui sont montées sur les brides de bobines (13, 14) pour les extrémités d'enroulement de la bride de bobine (13, 14) sont pliées à angle droit vers l'extérieur et reliées par brasage au raccord (21) d'une piste conductive et en ce que la partie saillante (18) est déplacée par rapport au raccord et comporte un dispositif (22) de connexion à fiches d'un type courant du commerce.

3. Petit moteur selon les revendications 1 et 2, caractérisé en ce que la plaquette est réalisée d'une seule pièce avec la bride (13, 14) du corps de bobine (9, 10) d'une bobine excitatrice.

4. Petit moteur selon les revendications 1 à 3, caractérisé en ce que la périphérie extérieure de la plaquette (16) comporte plusieurs raccords (21) pour les extrémités des bobines et/ou plusieurs parties saillantes (18) pour des connexions à fiches (22).

5. Petit moteur selon une des revendications précédentes, caractérisé en ce que le moteur comporte plusieurs systèmes de stator disposés les uns à côté des autres dans la direction de l'axe du moteur et plusieurs plaquettes (16) disposées de telle manière qu'à chaque enroulement excitateur correspondent plusieurs pistes conductives (20) montées sur une plaquette (16).

6. Petit moteur selon l'une des revendications précédentes, caractérisé en ce que la plaquette (24) est constituée par un substrat formé par une pellicule et comporte une ou plusieurs tiges de liaison (26a, 26b) qui portent des raccords (29) pour des broches de sortie (15) et peuvent se rabattre vers l'extérieur pour sortir du plan de la plaquette.

7. Petit moteur selon l'une des revendications précédentes, caractérisé en ce que la plaquette est une pièce qui s'étend sur l'espace d'enroulement d'un corps de bobine (9, 10).

8. Petit moteur selon les revendications 1 à 7, caractérisé en ce que les pièces d'accouplement pour les connexions à fiches montées au niveau d'un raccord (22) pour fiches sur la plaquette sont disposées de préférence de manière à s'engager dans la direction de l'axe du moteur.

9. Petit moteur selon les revendications 1 à 10, caractérisé en ce que les raccords (21) de la plaquette (16) sont constitués par des alésages et/ou des fentes assurant les contacts.

10. Petit moteur selon les revendications 1 à 12, caractérisé en ce que la plaquette (16) constitue un support pour pièces miniaturisées, surtout pour pièces électroniques, et comporte des pistes conductives et des raccords correspondants supplémentaires.

**Claims**

1. A small motor designed as a stepping or synchronous motor and having at least two stator systems arranged adjacently in the motor axis direction, said systems each comprising an exciting coil (2, 3) and terminal plates (5, 6; 4, 7), said exciting coils being mounted on coil elements (9, 10) which each have an inner flange (13, 14) and an outer flange (11, 12) and which support connection pins (15) connected in electrically conductive manner to the ends of the windings at a flattened portion of their inner flanges, characterized in that both stator systems are arranged in a joint motor housing (8) which has at least one cutout for projections (18, 25) extending beyond said motor housing (8) of a printed circuit board (16, 24) provided with conducting paths (20), said projections extending beyond said motor housing being provided with connections (22) suitable for a plug connection, and which has at least one further cutout (23) for acess to the spatially offset connection points (21, 29) of said printed circuit boards (16, 24) to said connection pins (15) for said ends of the windings of said exciting coils (2. 3).

2. A small portion according to Claim 1, characterized in that the printed circuit board (16) is arranged centrally between the coil elements (9, 10) in the motor housing (8), in that the connection pins (15) attached to the coil flanges (13, 14) for the ends of the windings of said coil flanges (13, 14) are bent outwards at right angles and soldered to the connection point (21) of a conducting path and in that the projection (18) is arranged offset to the connection point and is provided with a plug connector connection (22) of commercially available type.

3. A small motor according to Claims 1 and 2, characterized in that the printed circuit is designed in one piece with the flange (13, 14) of the coil element (9, 10) of an exciting coil.

4. A small motor according to Claims 1 to 3, characterized in that several connection points (21) for the coil ends and/or several projections (18) for plug connector connections (22) are provided on the outer circumference of the printed circuit board (16).

5. A small motor according to one of the previous Claims, characterized in that the motor has several stator systems arranged adjacently in the motor axis direction and several printed circuit boards (16) arranged such that several conducting paths (20) arranged on a printed circuit board (16) are allocated to each exciter winding.

6. A small motor according to one of the previous Claims, characterized in that the printed circuit board (24) coprises a film substrate and has one or more tabs (26a, 26b) on which connection points (29) for the connection pins (15) are arranged and which can be folded out of the printed circuit board level.

7. A small motor acording to one of the previous Claims, characterized in that the printed circuit board is designed as the component spanning the winding area of a coil element (9, 10).

8. A mall motor according to Claims 1 to 7, characterized in that the coupling parts for the plug connectors attached to a plug conection (22) of the printed circuit board are preferably insertable in the motor axis direction.

9. A small motor according to Claims 1 to 10, characterized in that the connection points (21) of the printed circuit board (16) are designed as fully contacted boreholes and/or slots.

10. A small motor according to Claims 1 and 12, characterized in that the printed circuit board (16) is designed as the carrier for miniaturized, predominantly electronic components, and has appropriate additional conducting paths and connections.

Fig. 1

EP 0 272 401 B1

Fig. 2

EP 0 272 401 B1

Fig. 3

Fig. 4

Fig. 5